# EUROPEAN PATENT APPLICATION

(11) **EP 4 773 471 A1**
(43) Date of publication of application: **08.07.2026**
(21) Application number: 25169405.5
(22) Date of filing: 09.04.2025
(51) Int. Cl.: H02J 50/12

(54) **AN INTEGRATED CIRCUIT**

(30) Priority: 03.01.2025 IN 202541000601
(71) Applicant: NXP B.V., 5656 AG Eindhoven (NL)
(72) Inventor: Labdhe, Nitin, 5656AG Eindhoven (NL); Mali, Karan Rajan, 5656AG Eindhoven (NL)
(74) Representative: Krott, Michel

(57) **Abstract**

An integrated circuit for a wireless charging receiver, the integrated circuit comprising: a differential input for receiving a differential voltage from an antenna of the wireless charging receiver, the differential input comprising a first input terminal and a second input terminal; a variable resistor coupled between the first input terminal and the second input terminal; a rectifier coupled to the differential input and configured to: receive the differential voltage; and output a rectified voltage; a control circuit coupled to the rectifier and the variable resistor, wherein the control circuit is configured to: monitor a rise time of the rectified voltage; and set a resistance value of the variable resistor based on the rise time.

## Description

### Field

The present disclosure relates to an integrated circuit for a wireless charging receiver and a wireless charging receiver.

### Summary

According to a first aspect of the present disclosure there is provided an integrated circuit for a wireless charging receiver, the integrated circuit comprising:
a differential input for receiving a differential voltage from an antenna of the wireless charging receiver, the differential input comprising a first input terminal and a second input terminal;
a variable resistor coupled between the first input terminal and the second input terminal;
a rectifier coupled to the differential input and configured to:
   receive the differential voltage; and
   output a rectified voltage;
a control circuit coupled to the rectifier and the variable resistor, wherein the control circuit is configured to:
   monitor a rise time of the rectified voltage; and
   set a resistance value of the variable resistor based on the rise time.

In one or more embodiments, the rise time of the rectified voltage may comprise a time for the rectified voltage to rise from a first voltage threshold to a second voltage threshold higher than the first voltage threshold.

In one or more embodiments, the control circuit may comprise a comparator circuit and a rise time counter. The comparator circuit may be configured to:
compare the rectified voltage to one or more voltage thresholds; and
trigger a rise time counter in response to the rectified voltage exceeding at least one of the one or more voltage thresholds.

In one or more embodiments, the comparator circuit may be configured to:
trigger the rise time counter to commence counting when the rectified voltage exceeds a first voltage threshold; and
trigger the rise time counter to stop counting when the rectified voltage exceeds a second voltage threshold greater than the first voltage threshold.

In one or more embodiments, the comparator circuit may comprise:
a first comparator configured to compare the rectified voltage to the first voltage threshold; and
a second comparator configured to compare the rectified voltage to the second voltage threshold.

In one or more embodiments, the control circuit may be configured to set the first voltage threshold and/or the second voltage threshold.

In one or more embodiments, the control circuit may comprise a resistance setting circuit configured to:
receive the rise time as a rise time count from the rise time counter; and
set the resistance value based on the rise time count.

In one or more embodiments, the resistance setting circuit may be configured to:
receive a trigger signal from the comparator circuit indicating that the rectified voltage has exceeded a second voltage threshold; and
obtain the rise time count from the rise time counter in response to receiving the trigger signal.

In one or more embodiments, the resistance setting circuit may be configured to set the resistance value based on the rise time count using a lookup table that relates values of the rise time count to corresponding resistance values of the variable resistor.

In one or more embodiments, the rectifier may be configured to output the rectified voltage to integrated circuitry of the integrated circuit.

In one or more embodiments, the integrated circuitry may comprise CMOS 40nm integrated circuitry.

In one or more embodiments, the rectifier may be configured to rectify the differential voltage to output a rectified direct current voltage.

In one or more embodiments, the integrated circuit may comprise a ripple capacitor coupled to an output of the rectifier.

According to a second aspect of the present disclosure, there is provided a wireless charging receiver comprising:
an antenna; and
any integrated circuit disclosed herein, wherein the integrated circuit is coupled to the antenna.

In one or more embodiments, the wireless charging receiver may comprise impedance matching circuitry coupled between the antenna and the integrated circuit.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 illustrates an example wireless charging receiver;
Figure 2 illustrates a receiver comprising an integrated circuit according to an embodiment of the present disclosure;
Figure 3 illustrates a simulated rectified voltage as a function of the transmitter input voltage for a receiver having an IC without any protection;
Figure 4 illustrates simulation results showing the resistance value of the variable resistor that maintained the rectified voltage around 4.5V, for different rise time values;
Figure 5 illustrates a simulation of the transient variation of the rectified voltage for a receiver with an unprotected IC;
Figure 6 illustrates a simulation of the of the transient variation of the rectified voltage for a receiver with an IC according to an embodiment of the present disclosure; and
Figure 7 illustrates simulation results for regulated values of the rectified voltage for different transmitter input voltages and different coupling conditions.

### Detailed Description

In a near-field communication (NFC) wireless charging (WLC) system, a data communication link is established between a poller (also referred to herein as a wireless charging transmitter or transmitter) and a listener (also referred to herein as a wireless charging receiver or receiver) using NFC. Once the NFC link is established, the listener can negotiate with the poller for charging power, using a wireless power transfer protocol (WPT), and charge a battery connected to the listener. Before establishing the data communication link between the poller and the listener, the poller can emit a strong magnetic field which can result in a very high voltage at an input of the listener which can cause damage to an IC of the listener.

The present disclosure provides an integrated circuit (IC) for a wireless charging receiver that can protect the receiver from the above described high-voltage damage.

A NFC wireless charging system typically comprises a NFC Poller (transmitter) which can generate a short range magnetic field, and a listener (receiver) device. When the listener is placed in the magnetic field, a voltage can be generated across its antenna terminals with a magnitude dependent on the poller TX emission power, poller and listener antenna matching circuitry, and coupling between the poller and listener antennas.

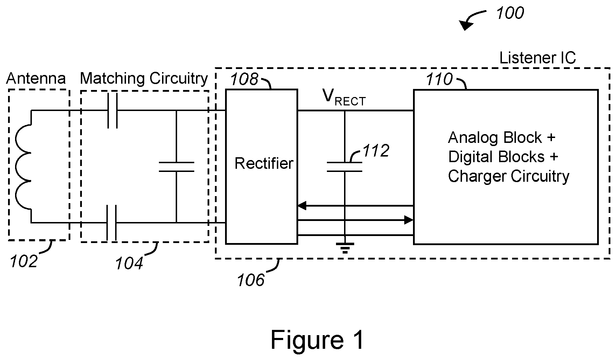

Figure 1 illustrates an example wireless charging receiver (listener) 100. The receiver comprises an antenna 102, matching circuitry 104 and an integrated circuit 106. The integrated circuit 106 comprises a rectifier 108 and integrated circuitry 110.

The antenna 102 can receive power from the transmitter via the magnetic field and generate a differential voltage across its terminals (a first antenna terminal and a second antenna terminal). The matching circuit 104 can provide impedance matching between the antenna 102 and the integrated circuit 106.

The integrated circuit 106 comprises a differential input comprising a first input terminal and a second input terminal for coupling to the antenna 102 via the matching circuit 104. In this way, the differential input can receive the (impedance matched) differential voltage from the antenna 102.

The rectifier 108 may receive the differential voltage from the differential input, rectify the differential (AC) voltage and output a DC rectified voltage, V_{RECT}. The DC voltage, V_{RECT}, is based on the peak differential voltage present at the input to the rectifier 108. The rectifier 108 can output the rectified voltage, V_{RECT}, to operate the integrated circuitry 110. The integrated circuitry 110 may comprise the functional circuitry of the integrated circuit. In this example, the integrated circuitry 110 comprises an analog block, a digital block and charger circuitry.

In this example, the receiver 100 comprises a ripple capacitor 112 at the output of the rectifier. The ripple capacitor 112 may have a large capacitance and act as a filter to reduce ripples on the rectified voltage, V_{RECT}.

As noted above, power transfer between the transmitter and the receiver 100 for charging a battery connected to the receiver 100 begins by establishing a NFC data communication link. Before establishing the data communication link, any current generated in the receiver 100 is consumed by the Digital/Analog blocks of the integrated circuitry 110 because the battery charger is in off state. The current consumed by the receiver 100 may be a few mA, which can result in a High Voltage developing in the receiver 100 due to the presence of the strong magnetic field of the transmitter. The integrated circuit 106 / integrated circuitry 110 can only tolerate a certain voltage level at its input before damage occurs. For example, C 40 nm technology can typically tolerate up to 6.2V. The voltage generated at the input of the receiver 100 can be up to 15-18 V when the transmitter transmits high power (e.g. coupling and matching is good). Therefore, the IC 106 of the receiver 100 may be damaged if exposed to the strong magnetic field and resulting high voltage for a long time.

The present disclosure describes an IC for a receiver that can protect the receiver from developing such high over voltage levels when the receiver is exposed to the strong magnetic field emitted by poller.

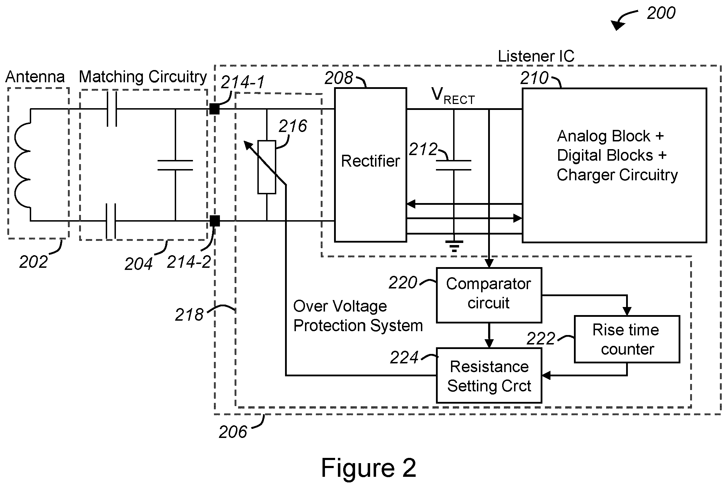

Figure 2 illustrates a receiver 200 comprising an integrated circuit 206 according to an embodiment of the present disclosure. Features of Figure 2 that are also present in Figure 1 have been given corresponding numbers in the 200 series and are not necessarily described again here.

The integrated circuit 206 comprises a differential input for receiving a differential voltage from the antenna 202 of the wireless charging receiver 200. The differential input comprises a first input terminal 214-1 and a second input terminal 214-2. The IC 206 comprises a variable resistor 216 coupled between /across the first input terminal 214-1 and the second input terminal 214-2. In this way, the variable resistor 216 can act as a shunt resistor at the differential input.

Similar to the example of Figure 1, the IC 206 comprises a rectifier 208. The rectifier is coupled to the differential input to receive the differential voltage. The rectifier 208 can rectify the differential voltage (e.g. using diode circuitry or other known rectification techniques) and output the rectified (DC) voltage, V_{RECT}.

The IC 206 comprises a control circuit 218 coupled to the rectifier output and the variable resistor 216. The control circuit 218 monitors or measures a rise time (or slew rate) of the rectified voltage, V_{RECT}, and sets a resistance value of the variable resistor 216 based on the rise time.

In this example, the receiver 200 comprises matching circuitry 204 and a ripple capacitor 212 with the same functionality as described above in relation to the example of Figure 1.

As described herein, the rise time of the rectified voltage, V_{RECT}, corresponds to a time for the rectified voltage, V_{RECT}, to rise by a specific voltage value following start-up (i.e. when the receiver 200 is initially placed in the magnetic field of the transmitter).

The variable resistor advantageously provides a way to dump excess power at start-up before battery charging commences. The rise time of the rectified voltage, V_{RECT}, can indicate a magnitude of the power transferred from the transmitter to the receiver 200. In other words, the rise time can provide an indication of how well the transmitter and the receiver 200 are aligned and the resulting magnitude of power transfer. In this way, the control circuit 218 can advantageously detect conditions that could lead to over-voltage damage and control the variable resistor to avoid such damage conditions before the voltage at the receiver 200 rises too high.

In this example the control circuit 218 comprises a comparator circuit 220, a rise-time counter 222 and a resistance setting circuit 224.

The comparator circuit 220 may comprise a lower threshold comparator and an upper threshold comparator. The lower threshold comparator may be configured to compare the rectified voltage, V_{RECT}, to a lower voltage threshold, V_{TH_LOWER}, which is an example of a first voltage threshold. Similarly, the upper threshold comparator may be configured to compare the rectified voltage, V_{RECT}, to an upper voltage threshold, V_{TH_UPPER}, (which is an example of a second voltage threshold) greater than the lower voltage threshold, V_{TH_LOWER}. The two thresholds, V_{TH_LOWER}, V_{TH_UPPER}, may be configurable such that the integrated circuit 206 can be configured to operate with a range of different transmitters and/or receivers.

The comparator circuit 220 may output a counter control signal to trigger (start / stop) the rise time counter 222 and measure the rise time of the rectified voltage, V_{RECT}. In this way, the comparator circuit 220 is configured to compare the rectified voltage, V_{RECT}, to one or more voltage thresholds and trigger the rise time counter 222 in response to the rectified voltage, V_{RECT}, exceeding at least one of the one or more voltage thresholds.

The resistance setting circuit 224 may receive the rise time from the rise time counter 222. The resistance setting circuit 224 may receive the rise time as a rise time count. The resistance setting circuit 224 may set the resistance value of the variable resistor 216 based on the rise time. The resistance setting circuit 224 may comprise a look-up table that relates values of the rise time (e.g. rise time count) to resistance values of the variable resistor 216. A lookup table advantageously reduces computational complexity. The look-up table may comprise a discrete set of pairs of values. The resistance setting circuit 224 may determine a resistance value to set the variable resistor by using the rise time with the look up table. In some examples, the resistance setting circuit 224 may use interpolation when the rise time is between the discrete rise time values in the lookup table.

Operation of the receiver 200 will now be described with continuing reference to Figure 2. When the antenna 202 of the receiver 200 is brought into the magnetic field of the transmitter, the rectified voltage, V_{RECT}, will start to rise.

The rate of increase will depend on the magnetic field strength at the receiver 200 (which is based on transmitter power and coupling efficiency). When the rectified voltage, V_{RECT}, increases above the lower voltage threshold, V_{TH_LOWER}, the comparator circuit 220 can trigger the rise time counter 222 to start measuring the rise time, i.e. start counting. For example, the output of the first comparator may go to a logic HIGH level to trigger the rise time counter 222 to start counting. The rise time counter 222 continues to count until the rectified voltage, V_{RECT}, exceeds the upper voltage threshold, V_{TH_UPPER}, at which time the comparator circuit 220 can trigger the rise time counter 222 to stop measuring the rise time. For example, the output of the second comparator may go to a logic HIGH level to trigger the rise time counter 222 to stop counting.

The resistance setting circuit 224 receives or obtains the rise time from the rise time counter 222. In some examples, the comparator circuit 220 may trigger the resistance setting circuit 222 to obtain the rise time count in response to the rectified voltage, V_{RECT}, exceeding the upper voltage threshold, V_{TH_UPPER}. The resistance setting circuit 224 may determine a resistance value to set the variable resistor 216 by using the lookup table with the rise time. The resistance setting circuit 224 can set the resistance value of the variable resistor 216 to the determined resistance value. By controlling the resistance value of the variable resistor 216, the control circuit 218 can regulate the rectified voltage, V_{RECT}, to a target value (which may be defined by mapping in the lookup table). Setting the resistance value of the variable resistor 216 to an appropriate value can reduce current flowing into the rectifier 208, thereby limiting the rise in the voltage level at the rectifier output and protecting the integrated circuitry 210 from damaging voltages.

The specific control circuit of Figure 2 provides an advantageously simple solution that can be implemented predominantly or exclusively in hardware with minimum complexity. For example, the comparators, counter 222 and look-up table can be implemented with simple logic circuitry and registers. In other examples, the control circuit 218, may make use of other known control circuitry that can monitor the rise time of the rectified voltage, V_{RECT}, and set the resistance value of the variable resistor accordingly. In some examples, the control circuit 218 may include a software control component. For example, in some examples, instead of a lookup table, the resistance setting circuit 224 may include a processor to calculate a value for the resistance value by processing the rise time according to a modelled equation.

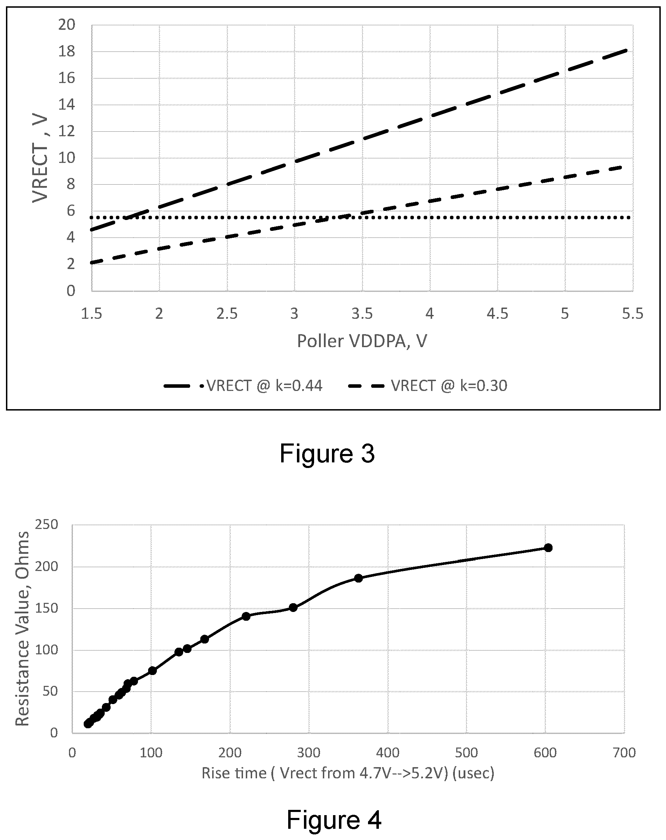

Figures 3 to 7 illustrate simulation results of the beneficial effects of a wirelesss charging receiver comprising an IC according to an embodiment of the present disclosure. The receiver was simulated in in Advanced Design System (ADS) Simulation Software by building a simulation model of a WLC charging system including a transmitter and a receiver with an IC according to an embodiment of the present disclosure.

In the simulation, a WPC poller (transmitter) is emitting an RF field depending on a transmitter input voltage, VDDPA. In a typical NFC WLC poller, the transmitter input voltage, VDDPA, varies from ~ 1.5 V to 5.5 V. In the simulation, the poller and listener (receiver) are coaxially aligned with good coupling. The coupling strength, k, can vary between a minimum coupling, kmin = 0.3 and a maximum coupling, kmax = 0.44.

Figure 3 illustrates the rectified voltage, V_{RECT}, at the output of the rectifier as a function of the transmitter input votlage, VDDPA, for a receiver having an IC without any protection (i.e. the receiver of Figure 1). Different plots are shown for the minimum and maximum coupling, kmin, kmax. The Figure illustrates that the rectified voltage, V_{RECT}, can rise as high as 18V depending on the transmitter input voltage, VDDPA, and the coupling, k, between Poller and Listener Antenna. For CMOS 40 nm technology, the maximum voltage the IC can withstand is 6.2V and it decreases as process node decreases. Hence, generation of such High voltages as seen in Figure 3 can permanently damage the IC.

A receiver circuit having an IC with a variable resistor and control circuit 218 like that of Figure 2 was also simulated. In the simulation, the rectified voltage, V_{RECT}, was connected to the input of two comparator blocks to compare the rectified voltage, V_{RECT}, to two voltage threshold levels, V_{TH_LOWER}, V_{TH_UPPER}. The rise time counter was implemented to measure the rise time. The rise time counter starts when the rectified voltage, V_{RECT}, rises above the first voltage threshold, V_{TH_LOWER}, and stops when the rectified voltage rises above the second voltage threshold, V_{TH_UPPER}. The rise time provides an upfront indication of the power transferred and how high the rectified voltage can rise. The resistance setting circuit reads the rise time from the rise time counter and calculates the resistance value for the variable resistor. A look-up table based approach is used to calculate the resistance value from the rise time to save the processor from complex calculations.

Figure 4 illustrates simulation results showing the resistance value of the variable resistor that maintained the rectified voltage around 4.5V, for different rise time values. The simulated values were used to define the lookup table shown below in table 1.

**Table 1: Look up table of rise time values and resistance values**

| **Index** | **Rise time (us)** | **R_PROT (Ohms)** |
|---|---|---|
| 0 | > 737 | 320 |
| 1 | 590 | 200 |
| 2 | 368 | 186 |
| - | - | - |
| - | - | - |
| N | 15 | 24 |

Faster rise times indicate higher power at the receiver antenna. Faster rise times / higher power requires a lower resistance value of the variable resistor and vice versa.

For example, if the rise time is > 737 usecs, the control circuit will set the resistance value of the variable resistor to 320 Ohms. If the rise time is between 737 usecs and 589 usecs, the control circuit will set the resistance value to 200 Ohms...and so on. As mentioned above, in some examples, the control circuit may use interpolation for rise times between the discrete values of the lookup table.

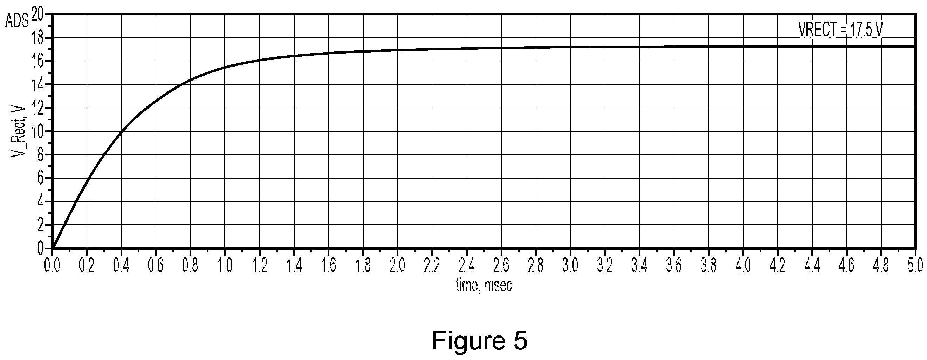

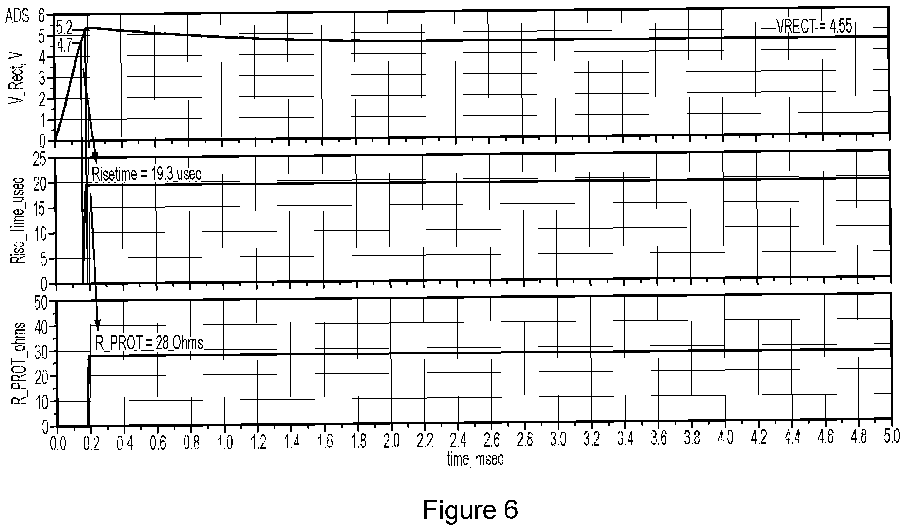

For Figures 5 and 6, the transmitter input voltage, VDDPA, was 5.5V and the coupling coefficient, k, was 0.44. The first voltage threshold, V_{TH_LOWER}, was 4.7 V and the second voltage threshold, V_{TH_UPPER}, was 5.2 V.

Figure 5 illustrates a simulation of the transient variation of the rectified voltage, V_{RECT}, for a receiver with an unprotected IC (such as the receiver of Figure 1). The rectified voltage, V_{RECT}, rises to a value of 17.5 V.

Figure 6 illustrates a simulation of the of the transient variation of the rectified voltage, V_{RECT}, for a receiver with an IC according to an embodiment of the present disclosure (such as the receiver of Figure 2). A top plot, illustrates a time plot of the rectified voltage, V_{RECT}, which rises to 5.2V in an initial 200 usecs after RF start-up, and the control circuit adjusts the resistance value of the variable resistor which acts like a shunt resistor to regulate the rectified voltage, V_{RECT}, to 4.55 V.

The middle plot illustrates operation of the rise time counter. At ~ 160 usecs, the rectified voltage, V_{RECT}, increases above the first voltage threshold the rise time counter to start counting. The rise time count increases until the rectified voltage increases above the second voltage threshold. The two threshold points are marked on the top plot with arrows to the second plot indicating the start and stop of the rise time count. The rise time count is 19.3 usecs. The resistance setting circuit then obtains a resistance value of 28 Ohms from the lookup table that corresponds to a rise time of 19.3 secs. The resistance setting circuit applies the resistance value to the variable resistor (see bottom plot), after which the rectified voltage, V_{RECT}, settles at 4.55 V. The settled value of 4.55 V falls within the optimum range for NFC WLC systems (3.3V - 5.5V).

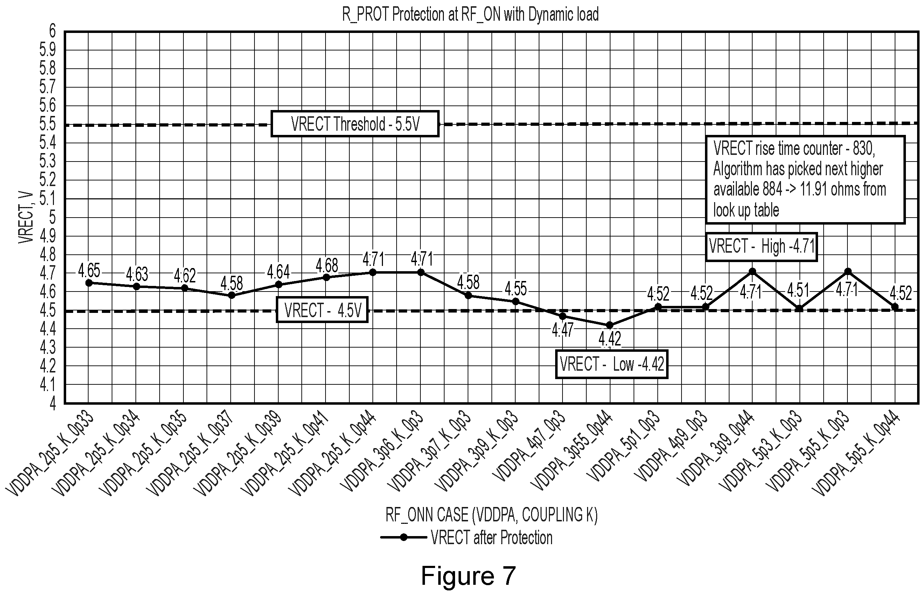

Figure 7 illustrates simulation results for regulated values of the rectified voltage, V_{RECT}, for different transmitter input voltages, VDDPA, and different coupling conditions. The receiver is able to regulate the rectified voltage, V_{RECT}, to approximately 4.5V for all conditions.

The disclosed apparatus provide over-voltage protection (OVP) for NFC wireless charging receiver ICs against high voltages that can develop at input pins when the receiver first enters the poller system magnetic field during RF start-up. The OVP comprises a configurable resistive load connected between the differential input terminals of the receiver IC to provide a shunt across the antenna terminals. The resistive load can drain excess power/current before the rectifier thereby protecting the receiver IC from developing high voltage levels. The value of the resistive load is determined based on the rise time of the rectified voltage and the resistive load is set before a communication link is established between the transmitted and receiver.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An integrated circuit for a wireless charging receiver, the integrated circuit comprising:
a differential input for receiving a differential voltage from an antenna of the wireless charging receiver, the differential input comprising a first input terminal and a second input terminal;
a variable resistor coupled between the first input terminal and the second input terminal;
a rectifier coupled to the differential input and configured to:
receive the differential voltage; and
output a rectified voltage;
a control circuit coupled to the rectifier and the variable resistor, wherein the control circuit is configured to:
monitor a rise time of the rectified voltage; and
set a resistance value of the variable resistor based on the rise time.

2. The integrated circuit of claim 1, wherein the rise time of the rectified voltage comprises a time for the rectified voltage to rise from a first voltage threshold to a second voltage threshold higher than the first voltage threshold.

3. The integrated circuit of claim 1 or claim 2, wherein the control circuit comprises a comparator circuit and a rise time counter, wherein the comparator circuit is configured to:
compare the rectified voltage to one or more voltage thresholds; and
trigger a rise time counter in response to the rectified voltage exceeding at least one of the one or more voltage thresholds.

4. The integrated circuit of claim 3, wherein the comparator circuit is configured to:
trigger the rise time counter to commence counting when the rectified voltage exceeds a first voltage threshold; and
trigger the rise time counter to stop counting when the rectified voltage exceeds a second voltage threshold greater than the first voltage threshold.

5. The integrated circuit of claim 4, wherein the comparator circuit comprises:
a first comparator configured to compare the rectified voltage to the first voltage threshold; and
a second comparator configured to compare the rectified voltage to the second voltage threshold.

6. The integrated circuit of claim 4 or claim 5, wherein the control circuit is configured to set the first voltage threshold and/or the second voltage threshold.

7. The integrated circuit of any of claims 3 to 6, wherein the control circuit comprises a resistance setting circuit configured to:
receive the rise time as a rise time count from the rise time counter; and
set the resistance value based on the rise time count.

8. The integrated circuit of claim 7, wherein the resistance setting circuit is configured to:
receive a trigger signal from the comparator circuit indicating that the rectified voltage has exceeded a second voltage threshold; and
obtain the rise time count from the rise time counter in response to receiving the trigger signal.

9. The integrated circuit of claim 7 or claim 8, wherein the resistance setting circuit is configured to set the resistance value based on the rise time count using a lookup table that relates values of the rise time count to corresponding resistance values of the variable resistor.

10. The integrated circuit of any preceding claim, wherein the rectifier is configured to output the rectified voltage to integrated circuitry of the integrated circuit.

11. The integrated circuit of claim 10, wherein the integrated circuitry comprises CMOS 40nm integrated circuitry.

12. The integrated circuit of any preceding claim, wherein the rectifier is configured to rectify the differential voltage to output a rectified direct current voltage.

13. The integrated circuit of any preceding claim comprising a ripple capacitor coupled to an output of the rectifier.

14. A wireless charging receiver comprising:
an antenna; and
the integrated circuit of any preceding claim, wherein the integrated circuit is coupled to the antenna.

15. The wireless charging receiver of claim 14 comprising impedance matching circuitry coupled between the antenna and the integrated circuit.
